**Europäisches Patentamt**

**European Patent Office**

**Office européen des brevets**

(19)

(11) Veröffentlichungsnummer : **0 353 521 B1**

(12) **EUROPÄISCHE PATENTSCHRIFT**

(45) Veröffentlichungstag der Patentschrift :
**01.04.92 Patentblatt 92/14**

(21) Anmeldenummer : **89112890.2**

(22) Anmeldetag : **14.07.89**

(51) Int. Cl.⁵ : **F16K 5/02, F16K 41/12**

(54) **Absperr- und Regelhahn.**

(30) Priorität : **23.07.88 DE 3825116**

(43) Veröffentlichungstag der Anmeldung :
**07.02.90 Patentblatt 90/06**

(45) Bekanntmachung des Hinweises auf die
Patenterteilung :
**01.04.92 Patentblatt 92/14**

(84) Benannte Vertragsstaaten :
**CH DE ES FR GB IT LI NL SE**

(56) Entgegenhaltungen :
**EP-A- 0 204 650**
**DE-A- 2 742 115**
**DE-U- 8 700 106**
**FR-A- 2 316 506**

(73) Patentinhaber : **XOMOX INTERNATIONAL**
**GMBH & CO.**
**Von-Behring-Strasse 15**
**W-8990 Lindau (DE)**

(72) Erfinder : **Gonsior, Wolfgang**
**Im Obstgarten 10**
**W-8990 Lindau-Bodolz (DE)**

(74) Vertreter : **Klose, Hans, Dipl.-Phys. et al**
**Kurfürstenstrasse 32**
**W-6700 Ludwigshafen (DE)**

EP 0 353 521 B1

## Beschreibung

Die Erfindung bezieht sich auf einen Absperr- und Regelhahn gemäß den im Oberbepriff des Patentanspruchs 1 angegebenen Merkmalen.

Aus der DE-A-2742 115 ist ein derartiger Absperr- und Regelhahn bekannt, dessen Schaft mit zwei im Gehäusedeckel angeordneten Dichtelementen abgedichtet ist. Der Deckel weist an seiner dem Gehäuse zugewandten Unterseite eine Ringnut auf, in welche das erste Dichtelement eingesetzt ist. Zwischen dem Schaft und dem Absperrelement ist ein Verbindungsstück angeordnet, welches als eine Scheibe mit T-förmigem Querschnitt ausgebildet ist und in eine Vierkantausnehmung des Absperrelements eingreift. Das Verbindungsstück weist einere ringförmigen äußeren Abschnitt auf, welcher einen größeren Durchmesser als der Schaft aufweist. Das erste Dichtelement ist auf dem genannten äußeren Abschnitt abgestützt, so daß die Dichtwirkung des Dichtelements von der axialen Position des Verbindungsstückes und des Schaftes abhängig ist. Da die axiale Stellung des Schaftes aufgrund von Fertigungstoleranzen, Abrieb, äußeren Kräften und dergleichen variiert, können sich Schwierigkeiten im Hinblick auf Sicherheitsvorschriften sowie Vorschriften zum Umweltschutz ergeben, um die geforderten Grenzwerte für Leckraten auch für eine lange Lebensdauer einhalten zu können.

Ist das Absperrelement in Richtung der Achse des Schaftes einstellbar, was insbesondere bei Ausbildung als ein konisches Küken der Fall ist, so können sich zusätzliche Schwierigkeiten ergeben. Die konischen Dichtflächen eines derartigen Küken wirken mit einer in das Gehäuse zweckmäßig eingepreßten Buchse zusammen, welche regelmäßig aus Polytetrafluoräthylen (PTFE) oder einem vergleichbaren Werkstoff besteht. Bei der Montage muß eine Einstellung des Kükens in Richtung der Achse des Schaftes erfolgen, um eine dichte Anlage zu gewährleisten. Hierbei können sich die auf das erste Dichtelement einwirkenden Kräfte verändern, wobei eine zu starke Anpressung des ersten Dichtelements an den Schaft einen zu hohen Verschleiß und eine reduzierte Lebensdauer und letztendlich eine verminderte Dichtwirkung zur Folge hat.

Der Erfindung liegt daher die Aufgabe zugrunde, den Absperr- und Regelhahn der genannten Art mit geringem konstruktivem Aufwand dahingehend weiterzubilden, daß die Dichtwirkung des ersten Dichtelements unabhängig von der axialen Stellung des Schaftes ist und eine funktionssichere Abdichtung für eine lange Lebensdauer gewährleistet wird.

Die Lösung dieser Aufgabe erfolgt für den Absperr- und Regelhahn der genannten Art gemäß dem im kennzeichnenden Teil des Patentanspruchs 1 angegebenen Merlkmalen.

Der vorgeschlagene Absperr- und Regelhahn weist einen einfachen und gleichwohl funktionssicheren Aufbau auf. Aufgrund der Abstützung des ersten Dichelements auf der vom Schaft getrennten und zwischen dem Deckel und dem Gehäuse festgelegten Ringscheibe hat die momentane axiale Stellung des Schaftes keinen Einfluß auf die Dichtwirkung des ersten Dichtelements, welches somit optimal seine Dichtwirkung entfaltet. Die Sicherheitsanforderungen werden erfüllt und die Leckrate wird für eine lange Lebensdauer minimiert. Durch die Abstützung des ersten Dichtelements mittels der im Gehäuse festgesetzten Ringscheibe werden für das erste Dichtelement definierte Verhältnisse, und zwar unabhängig von der Einstellung des Schaftes und des Kükens im Gehäuse, geschaffen. Es liegen damit reproduzierbare Verhältnisse vor, und zwar sowohl hinsichtlich des Kükens bezüglich des Gehäuses, als auch hinsichtlich des ersten Dichtelementes für den Schaft vor, so daß mit geringem konstruktivem Aufwand und bei geringem Bauvolumen eine sichere Abdichtung gewährleistet wird. Mittels des zweiten, bevorzugt nachstellbaren Dichtelements, ist es mit minimalem konstruktiven Aufwand möglich, nach Feststellung einer unzulässigen Leckströmung diese für einen vorgegebenen Zeitraum zu unterbinden. Das Dichtelement weist im normalen Betriebs- bzw. Einstellzustand praktisch keine Dichtfunktion auf. Dem zweiten Dichtelement ist eine Nachstelleinrichtung zugeordnet, welche bei Bedarf in der Weise betätigt ist, daß diese zusätzlichen Dichtmittel ihre Dichtwikung entfalten können. Es sei hier festgehalten, daß die Dichtelemente in an sich bekannter Weise am Schaft anliegen und somit nach außen abdichten. Aufgrund des mechanischen Kontaktes der Dichtelemente mit dem Schaft entsteht eine insbesondere von der Anzahl der Schaftbetätigungen abhängige Abnutzung dieser in der Regel aus einem elastomeren Werkstoff bestehenden Dichtelemente.

In einer besonders zweckmäßigen Ausgestaltung ist das als Küken ausgebildete Absperrelement bezüglich des Schaftes in Richtung der Längsachse des Gehäuses und damit in Strömungsrichtung verstellbar. Aufgrund dieser Verstellbarkeit werden durch die Strömung bedingte Kräfte weitgehend vom Schaft ferngehalten. Dies hat zur Folge, daß bereits im Normalbetrieb die Dichtelemente des Schaftes weniger beansprucht werden. Eine Kraftbeaufschlagung des Schaftes über das Küken hat nämlich zur Folge, daß vor allem in Strömungsrichtung betrachtet, zwischen dem Dichtelement und dem Schaft eine größere Anlagekraft wirksam ist als in anderen Richtungen mit der Folge, daß dort am Dichtelement eine größere Abnutzung stattfindet. Diese Nachteile werden durch die zweiteilige Ausbildung von Schaft und Küken sowie dessen Bewegbarkeit zum Schaft in einfacher Weise vermieden.

Die Erfindung wird nachfolgend anhand der in der Zeichnung dargestellten Ausführungsbeispiele näher erläutert. Es zeigen:

Fig. 1 einen Längsschnitt durch einen Absperr- und Regelhahn, bei welchem sowohl das Küken als auch das zweite Dichtelement auf der Schaftseite eingestellt werden,

Fig. 2 eine Ausgestaltung, bei welcher das zweite Dichtelement auf der Schaftseite und das Küken auf der entgegengesetzten Seite des Gehäusese eingestellt werden.

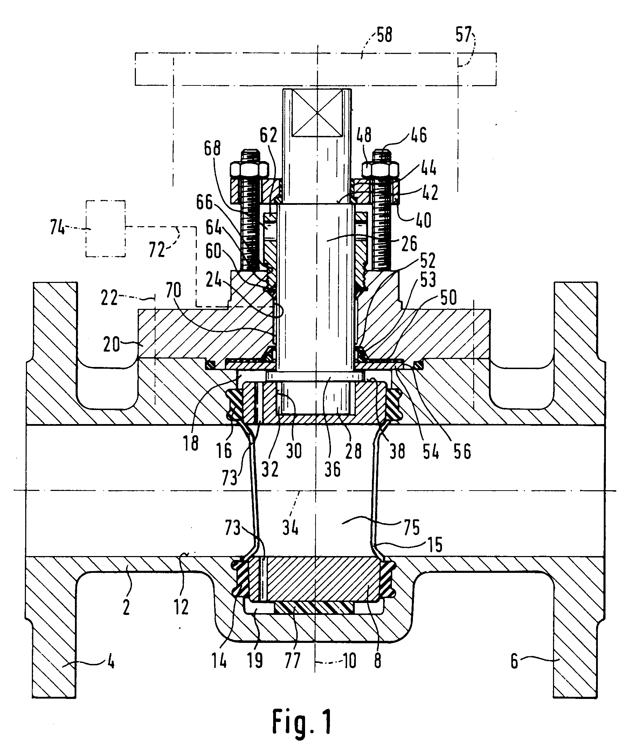

Fig. 1 zeigt in einer axialen Ebene einen Schnitt durch ein Gehäuse 2 mit an den axialen Enden angeordneten Flanschen 4, 6, mittels welchen in gewohnter Weise die Verbindung mit einem Rohrleitungssystem herstellbar ist. Im Gehäuse 2 ist ein Küken 8 um eine Achse 10 drehbar, um den im Inneren des Gehäuses 2 vorhandenen Kanal 12 freizugeben oder abzusperren. Zur Abdichtung des Kükens 8 gegenüber dem Gehäuse ist in dieses eine Buchse 15 mit einer unteren Dichtleiste 14 und einer oberen Dichtleiste 16 eingepreßt. Das Gehäuse 2 weist eine Öffnung 18 auf, welche mittels eines Deckels 20 abgeschlossen ist. Der Deckel 20 ist, wie durch die strichpunktierten Linien 22 angedeutet, fest mit dem Gehäuse 2 verbunden und enthält in der Mitte eine Bohrung 24, durch welche ein Schaft 26 durchgeführt ist. Im Gegensatz zu bisher bekannt gewordenen Kükenhähnen sind im Rahmen dieser Erfindung das Küken 8 und der Schaft 26 als separate Bauteile ausgebildet, wobei der Schaft 26 mit seinem Ende 28 in einer Ausnehmung 30 des Kükens 8 eingreift. Wesentlich ist hierbei, daß das beispielsweise als ein Vierkant ausgebildete Ende 28 mit Spiel in die Ausnehmung 30 eingreift, wie es durch den Spalt 32 angedeutet ist. Hierdurch wird eine Entkopplung zwischen Küken 8 und Schaft 26 erreicht, so daß durch das strömende Medium auf das Küken 8 einwirkende Kräfte weitgehend vom Schaft 26 ferngehalten werden. Das Küken 8 wird praktisch ausschließlich der Buchse 15 mit den Dichtleisten 14, 16 in Richtung der Längsachse 34, also orthogonal zur Schaftachse 10 abgefangen. Die zur Abdichtung des Schaftes vorhandenen und nachfolgend noch zu erläuternten Dichtelemente werde folglich weniger beansprucht, wobei insbesondere örtlich überhöhte Flächenpressungen und damit erhöhte Abnutzungen in einfacher Weise vermieden werden.

Wie ersichtlich, liegt das Küken 8 mit seinen konisch ausgebildeten Dichtflächen an der PTFE-Buchse 15 mit den Dichtleisten 14, 16 an. In Richtung der Achse 10 ist das Küken einstellbar bzw. justierbar, um eine gute Abdichtung ohne allzu große Flächenpressungen zu erhalten. Hierzu weist der Schaft 26 einen Bund 36 auf, welcher auf der Oberfläche 38 des Kükens 8 aufliegt. Der Schaft 26 wird bezüglich des Deckels 20 und somit des Gehäuses 2 in Richtung der Achse 10 zum Küken 8 über eine Hülse 40 beaufschlagt. Die Hülse 40 liegt auf einer Rigschulter 42 des Schaftes 26 mittelbar über einen Ringkörper 44 aus PTFE an. Die Hülse 40 ist mittels Schraubenbolzen 46 auf dem Deckel 20 angeordnet und kann durch Drehen der Mutter 48 in Richtung der Schaftachse 10 eingestellt werden.

Zur Abdichtung des Schaftes 26 bezüglich des Deckels 20 ist als erste Dichtelement ein Dichtring 50 angeordnet, der mit einer Dichtlippe 52, Welche ein im Querschnitt abgewinkelte Form aufweist, am schaft 26 anliegt. Wesentlich ist hierbei die Abstützung des Dichtringes und insbesondere der Dichtlippe 52 auf einer Ringscheibe 54. Die axiale Abstützung des Dichtringes 50 erfolgt also nicht beispielsweise über den Ringbund 36 des Schaftes, so daß unabhängig von der axialen Einstellung des Schaftes bzw. des Kükens 8 die gleiche Dichtwirkung erzielt wird. Die Ringscheibe 54 und der Dichtring 50 sind zweckmäßigerweise in eine Ringnut 56 an der dem Gehäuse 2 zugewandten Unterseite des Deckels 20 nach Art eines Paketes eingepreßt und fest mit dem Deckel verbunden. So wird bei der Montage oder bei Inspektionsmaßnahmen ein unbeabsichtigtes Herauslösen oder gar ein "Vergessen" des ersten Dichtelemtes bzw. des Dichtringes 50 zuverlässig unterbunden.

Dem Schaft 26 ist ein zweites Dichtelement zugeordnet, das als ein Dichtring 60 ausgebildet und nachstellbar am oberen Ende des Deckels 20 angeordnet ist. Zum Nachstellen des hier einen etwa dreieckförmigen Querschnitt aufweisenden Dichtringes 60 ist eine Buchse 62 vorgesehen, welche mit ihrem Außengewinde 64 in ein entsprechendes Innengewinde am oberen Deckelrand in der Bohrung 24 angeordnet ist. Die Buchse 62 ragt nach oben über den Deckel 20 vor und enthält Ausnehmungen 68, in die ein Werkzeug zum Drehen der Buchse 62 eingesetzt werden kann. Im Rahmen der Erfindung wird mit der Buchse 62 das zweite Dichtelemtent bzw. der Dichtring 60 im Normalbetrieb derart voreingestellt, daß er seine vollständige Dichtwirkung noch nicht erreicht. Der Dichtring 60 liegt also vergleichsweise lose am Schaft 26 an, wobei praktisch kein nennenswerter Verschleiß oder Abrieb des aus einem elastischen Dichtwerkstoff, ein Elastomer oder Gummi, bestehenden Dichtringes 60 erfolgt. Die eigentliche Dichtwirkung wird mittels des ersten Dichtelementes bzw. des Dichtringes 50 vorgegeben. Wenn die Dichtwirkung des Dichtringes im Laufe der Zeit nachläßt, so wird dies vom Bedienungspersonal festgestellt. Durch Anziehen der Buchse 62 wird nunmehr der Dichtring 60 an den Schaft 26 in der erforderlichen Weise eingestellt, um ein unzulässiges Austreten des Mediums am Schaft für die nächste Zeit zu unterbinden. Der Absperrhahn kann noch eine geraume Zeit benutzt werden, ohne daß sofort das Rohrleitungssystem oder eine komplexe Anlage insgesamt abgeschaltet werden müssen. Bei den nächsten routinemäßigen Revisionsarbeiten wird dann der erforderliche Austausch, sei es der Dichtelemente, des Kükens oder des gesamten Absperrhahns, durchgeführt.

3

Gemäß einer besonderen Ausgestaltung ist axial zwischen den beiden Dichtringen 50, 60 sowie radial zwischen dem Schaft 26 und der Innenwand der Bohrung 24 im Deckel 20 eine Ringkammer 70 vorhanden, die zur Überwachung genutzt wird. Wie durch die Linie 72 angedeutet, ist die Kammer 70 mit einem Gerät 74 zur Leküberwachung verbunden. Mit diesem Gerät 74 kann beispielsweise sensiert werden, ob und gegebenenfalls welche Menge des im Kanal 12 strömenden Mediums entweicht. Dies kann insbesondere auf elektrischem oder pneumatischem Wege erfolgen, wobei im Bereich der Ringkammer 70 entsprechende Sensoren zur Abgabe entsprechender Signale an das Gerät 74 vorgesehen sind. Auch bei einer derartigen Leküberwachung genügt es grundsätzlich, im Normalbetrieb den Dichtring 60 im Hinblick auf einen minimalen Verschleiß mit geringer Andruckkraft an dem Schaft 26 anliegen zu lassen. Im Falle eines Undichtwerdens des Dichtringes 50 dringt das Medium in die Ringkammer 70 ein und mit dem Gerät 74 wird diese Tatsache zur Anzeige gebracht.

Wie ferner durch die strichpunktierten Linien 57 angedeutet, ist oberhalb des Deckels mittels Bolzen eine Platte 58 oder dergleichen zur Befestigung eines hier nicht weiter dargestellten Stellantriebes angeordnet. Mit dem hydraulisch, pneumatisch oder elektrisch wirksamen Stellantrieb kann der Schaft 26 in der erforderlichen Weise um die Achse 10 gedreht werden. Wesentlich ist hierbei, daß entsprechend den Linien 57 die Verbindung des Stellantriebes direkt auf dem Deckel 20 vorgenommen wird, und zwar unabhängig von der Verbindung des Deckels mit dem Gehäuse, wie es durch die Linien 22 angedeutet ist. Hierdurch erfolgt eine zweckmäßige Entkopplung, die nicht nur im Hinblick auf das Schwingungsverhalten vorteilhaft ist. Auch ein unbeabsichtigtes Lösen des Deckels 20 bei eventuellen Montagemaßnahmen des Stellantriebes kann verhindert werden.

In einer besonderen Ausgestaltung weist das Küken 8 zwischen dem Durchgang 75 und dem oberhalb des Küken 8 befindlichen Raum 18 bzw. unterhalb befindlichen Raum 19 je eine Bohrung 73 auf. Die Räume 18, 19 sind somit druckbeaufschlagt bzw. druckausgeglichen. Die stirnseitige Fläche des Kükens 8 ist im oberen Raum 18 größer als im unteren Raum 19. Aufgrund dieser unterschiedlich großen Flächen ergibt sich eine auf das Küken axial wirksame Kraftkomponente, durch welche das Küken 8 fest in den Sitz gepreßt wird, wodurch eine erhöhte radiale Dichtkraft erreicht wird. Damit ein zu tiefes Einpressen des Kükens 8 in die Buchse 15 verhindert wird, ist im unteren Raum 19 eine Bodenscheibe 77 vorhanden, welche im Rahmen dieser Erfindung einen Anschlag bildet und den Weg des Kükens 8 begrenzt.

Auch wenn in einer alternativen Ausführungsform die Bohrungen 73 zu den genannten Räumen 18, 19 nicht vorhanden sind, so erweist sich die Bodenscheibe 77 als sehr bedeutsam. Tritt nämlich zwischen dem Küken 8 und der Buchse 15, welche die Dichtleisten 14, 16 aufweist, eine Leckage auf, so wird der hier obere Raum 18 mit Druck beaufschlagt, wodurch das Küken 8 in den Sitz gepreßt wird. Die hierdurch erhöhte Dichtkraft zwischen Küken 8 und der Buchse 15 reicht in der Regel aus, um die aufgetretene Leckage zu stoppen. Die Bodenscheibe 77 ist zwar für diesen Fall keine zwingende Voraussetzung, doch hat sich jene als zweckmäßige Ausbildung eines Anschlages bewährt. Die unter dem Küken in den Raum 19 eingelegte Bodenscheibe 77 besteht wiederum zweckmäßig aus PTFE oder einem vergleichbaren Werkstoff.

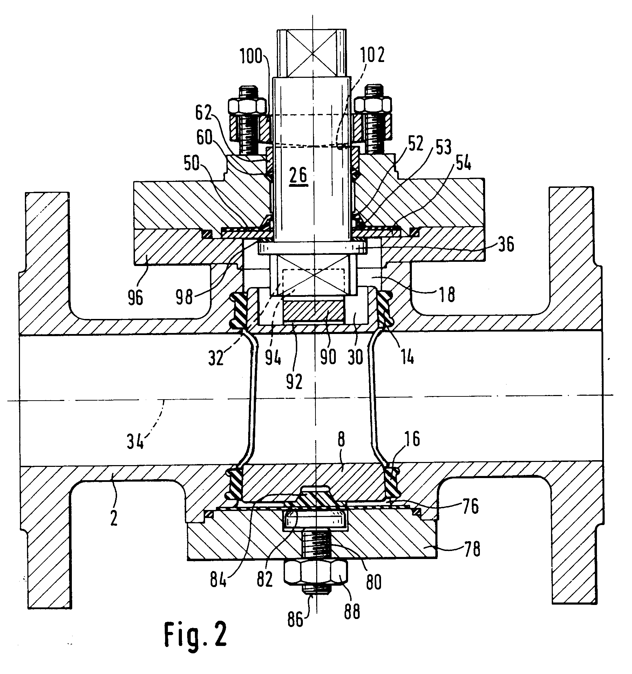

Fig. 2 zeigt einen Kükenhahn, bei welchem die Einstellung des Küken 8 auf der dem Schaft 26 gegenüberliegenden Seite des Gehäuses 2 erfolgt. Die Dichtflächen des Küken 8 sind wiederum konisch ausgeführt, wobei die Konusspitze auf der gleichen Seite wie der Schaft 26 bezüglich der Längsachse 34 liegt. Die kleinere Dichtleiste 14 der Buchse 15 ist nunmehr in der Öffnung 18 angeordnet, während der größere Dichtring 16 gemäß der Zeichnung an der Unterseite des Gehäuses in einer Öffnung 76 angeordnet ist, welche mittels eines Deckels 78 dicht abgeschlossen ist. Zur Einstellung und Justage des Küken 8 ist im Deckel 78 ein Gewindebolzen 80 vorgesehen, welcher über eine Dichtmembrane 82 und einen Druckkörper 84 von unten auf das Küken 8 einwirkt. Der Druckkörper 84 besteht zweckmäßig aus einem Werkstoff mit guten Gleiteigenschaften, insbesondere PTFE. Der Gewindebolzen 80 weist am unteren Ende 86 eine Ausnehmung, beispielsweise für einen Imbusschlüssel, auf und mittels der Kontermutter 88 erfolgt eine Arretierung.

Auch bei dieser besonderen Ausgestaltung ist im Rahmen der Erfindung das Küken 8 bezüglich des Schaftes 26 derart bewegbar, daß einerseits mit dem Schaft die Drehbewegung des Kükens durchgeführt und andererseits eine Entkopplung im Hinblick auf in Richtung der Längsachse 34 wirkenden Kräfte erfolgt. Hierzu weist das Küken 8 in seinem dem Schaft 26 zugewandten Ende, zweckmäßig innerhalb des Dichtbereiches mit dem Dichtring 14, die Ausnehmung 30 auf. In dieser Ausnehmung 30 ist ein Verbindungskörper 90 eingesetzt, welcher eine etwa T-förmige Kontur aufweist. Der Verbindungskörper 90 greift mit seinem hier gestrichelt dargestellten unteren Teil vor und hinter der Zeichenebene jeweils in eine Nut 92 ein und ist senkrecht zur Zeichenebene in dieser Nut 92 mit etwas Spiel bewegbar. Der obere zentrale Teil des Körpers 90 greift in eine Vierkant-Ausnehmung 94 des Zapfens 26 mit Spiel ein, wobei in Richtung der Längsachse 34 wiederum der Spalt 32 vorhanden ist.

Der Schaft 26 ist wiederum im Deckel 20 drehbar angeordnet, wobei mittels den ersten und zweiten Dichtelemeten bzw. den Dichtringen 50, 60 die Abdichtung erfolgt. Zusätzlich ist ein Zwischenring 96 zwischen den Deckel 20 und dem Gehäuse 2 vorgesehen, um sowohl den Stützring 54 als auch den Dichtring 50 axial festzulegen. Die Ringscheibe 54 ragt radial nach innen bis nahe an den Außenumfang des Schaftes 26. Damit ist eine zuverlässige Abstützung und Festlegung des Dichtringes 50 gewährleistet, wobei innerhalb der hakenförmig gestalteten Dichtlippe 52 ein Stützring 53 angeordnet ist, der ebenfalls auf der Ringscheibe 54 zuverlässig aufgelagert und abgestützt ist. Wesentlich ist darüberhinaus, daß mittels der Ringscheibe 54 auch die axiale Sicherung des Schaftes 26 im Zusammenwirken mit dem Ringbund 36 erfolgt. Der Ringbund 36 weist einen Außendurchmesser auf, der größer ist als der Innendurchmesser der Ringscheibe 54. Zweckmäßig ist zwischen dem Ringbund 36 und der Ringscheibe 54 ein Ring 98 mit guten Gleiteigenschaften, genannt sei hier PTFE, angeordnet, so daß der Schaft 26 mit geringem Kraftaufwand gedreht werden kann.

Der Dichtring 60 ist mittels der axial einstellbaren Buchse 62, wie oben bereits erläutert, festlegbar. Hierzu dient eine am oberen Rand des Deckels 20 angeordnete Brille 100, die mit ihrer Unterkante 102 auf der oberen Stirnfläche der Buchse 62 aufliegt. Wie dargestellt, ist die Unterkante 102 leicht konisch angeschrägt, so daß praktisch zwei Auflagepunkte auf der Buchse 62 vorhanden sind. Aufgrund dieser Auflagepunkte oder Bereiche, die zweckmäßig in einer zur Längsachse 34 orthogonalen Ebene liegen, wird eine im wesentlichen zentrische Krafteinleitung gewährleistet, so daß die Gefahr eines Verkantens oder Verklemmens der Buchse 62 vermieden wird.

Bezugzeichen

| 2 | Gehäuse |
|---|---|
| 4,6 | Flansch |
| 8, | Küken |
| 10 | Achse |
| 12 | Kanal |
| 14, 16 | Dichtleisten |
| 15 | Buchse |
| 18,19 | Öffnung, Raum |
| 20 | Deckel |
| 22 | Linie |
| 24 | Bohrung |
| 26 | Schaft |
| 28 | Ende |
| 30 | Ausnehmung |
| 32 | Spalt |
| 34 | Längsachse |
| 36 | Bund |
| 38 | Oberfläche |
| 40 | Hülse |
| 42 | Ringschulter |
| 44 | PTFE-Ringkörper |
| 46 | Schraubbolzen |
| 48 | Mutter |
| 50 | erste Dichtelement / Dichtring |
| 52 | Dichtlippe |
| 53 | Stützring |
| 54 | Ringscheibe |
| 56 | Ringnut |
| 57 | Linie |
| 58 | Platte |
| 60 | zweites Dichtelement / Dichtring |
| 62 | Buchse |
| 64 | Außengewinde |
| 66 | Innengewinde |
| 68 | Ausnehmung |
| 70 | Ringkammer |
| 72 | Leitung |
| 73 | Bohrung |
| 74 | Gerät |
| 75 | Durchgang |

| 76 | Bohrung |
|---|---|
| 77 | Bodenscheibe |
| 78 | Deckel |
| 80 | Gewindebolzen |
| 82 | Dichtmembrane |
| 84 | Druckkörper |
| 86 | Ausnehmung in 80 |
| 88 | Kontermutter |
| 90 | Verbindungskörper |
| 92 | Nut in 30 |
| 94 | Ausnehmung von 26 |
| 96 | Zwischenring |
| 98 | Ring |
| 100 | Brille |
| 102 | Unterkante |

**Patentansprüche**

1. Absperr- und Regelhahn mit einem insbesondere als Küken (8) ausgebildeten Absperrelement, mit einem Gehäuse (2), in welchem das Absperrelement mittels eines Schaftes (26) drehbar angeordnet ist und mit einem Gehäusedeckel (20), durch welchen der Schaft mittels eines ersten Dichelementes (50) abgedichtet und (26) nach außen geführt ist, wobei an der dem Gehäuse (2) zugewandten Seite des Deckel (20) das erste Dichtelemente (50) zwischen Deckels (20) und einem Scheibenförmigen Absatz (54) abgestützt ist und an der dem Gehäuse abgewandten Seite des Deckels (20) ein zweites Dichtelement (60) angeordnet ist, dadurch gekennzeichnet, daß der Scheibenförmige Absatz als ein vom Schaft (26) getrenntes, Bauteil in Form einer Ringscheibe (54) ausgebildet ist, welche zwischen dem Gehäuse und der dem Gehäuse (2) zugewandten Seite des Deckels (20) axial festgelegt ist.

2. Absperr- und Regelhahn nach Anspruch 1, dadurch gekennzeichnet, daß die Ringscheibe (54) in einer Ringnut (56) an der dem Gehäuse (2) zugewandten Seite des Deckels (20), insbesondere zusammen mit dem ersten Dichtelement (50), fest eingepreßt ist.

3. Absperr- und Regelhahn nach Anspruch 1 oder 2, dadurch gekennzeichnet, daß eine am Schaft (26) anliegende Dichtlippe (52) des ersten Dichtelements (50) eine im Querschnitt abgewinkelte Form aufweist und an der dem Deckel (20) zugekehrten Seite im radial inneren Bereich der Ringscheibe (54) bevorzugt mittels eines Stützringes (53) abgestützt ist.

4. Absperr- und Regelhahn nach einem der Ansprüche 1 bis 3, adurch gekennzeichnet, daß das im wesentlichen ohne Vorspannung am Schaft (26) anliegende zweite Dichtelement (60) bedarfsweise dadurch Verstellung eines den Schaft (26) umgebenden Elements (62), insbesondere einer Buchse (62), in seiner Vorspannung und damit in der Dichtwirkung gegenüber dem Schaft (26) auf einen vorgegebenen Wert einstellbar ist.

5. Absperr- und Regelhahn nach einem der Ansprüche 1 bis 4, dadurch gekennzeichnet, daß der Schaft (26) eine Ringschulter (42) aufweist, auf welcher eine in axialer Richtung einstellbare Hülse (40), insbesondere über einen gute Gleiteigenschaften aufweisenden Ringkörper (44) einwirkt, wobei durch Verstellung der Hülse (40) der Schaft (26) und das mit diesem verbundene Küken (8) in Richtung der Längsachse (10) des Schaftes (26) einstellbar ist.

6. Absperr- und Regelhahn nach einem der Ansprüche 1 bis 4, dadurch gekennzeichnet, daß das Gehäuse (2) auf der dem Schaft (26) gegenüberliegenden Seite eine mit einem Deckel (78) abgeschlossene Bohrung (76) aufweist, daß in dem Deckel (78) ein Bolzen (80) axial verstellbar ist, der über einen Druckkörper (84), bevorzugt auch über eine Dichtmembrane (82), auf das Küken (8) einwirkt.

7. Absperr- und Regelhahn nach einem der Ansprüche 1 bis 6, dadurch gekennzeichnet, daß das Küken (8) in Richtung der Längsachse (34) des Schaftes (26) mit Spiel bewegbar angeordnet ist, wobei zwischen dem Schaft (26) und dem Küken (8) oder zwischen einem Verbindungskörper (90), welcher zur Verbindung von Schaft (26) und Küken (8) vorgesehen ist, und dem Schaft (26) oder dem Küken (8) ein Spalt (32) zur Vorgabe des Bewegungsspiels vorhanden ist.

8. Absperr- und Regelhahn nach einem der Ansprüche 1 bis 7, dadurch gekennzeichnet, daß axial zwischen den beiden Dichtelementen (50, 60) eine den Schaft (26) umgebende Ringkammer (70) angeordnet ist, die zur Lecküberwachung dient.

9. Absperr- und Regelhahn nach Anspruch 8, dadurch gekennzeichnet, daß die Ringkammer (70) über eine Leitung (72) mit einem Gerät (74) zur Lecküberwachung verbunden ist.

10. Absperr- und Regelhahn nach einem der Ansprüche 1 bis 9, dadurch gekennzeichnet, daß die Ringscheibe (54) bis in die unmittelbare Nähe der Oberfläche des Schaftes (26) reicht, daß der Schaft (26) einen Ringbund (36) aufweist, welcher axial bezüglich der Ringscheibe (54) auf der anderen Seite als das erste Dichtelement (50) angeordnet ist, und daß der Ringbund (36) einen Außendurchmesser aufweist, der größer ist als der Innendurchmesser der Ringscheibe (54).

11. Absperr- und Regelhahn nach einem der Ansprüche 1 bis 10, dadurch gekennzeichnet, daß das Küken (8) zwischen seinem Durchgang (75) und Räumen (18, 19), welche auf einer dem Schaft (26) zugewandten beziehungsweise einer dem Schaft (26) abgewandten Seite des Kükens (8) angeordnet sind und innerhalb des Gehäuses (2) nach außen hin abgeschlossen sowie in Richtung der Achse (10) des Schaftes (26) durch stirnseitige Flächen des Kükens (8) begrenzt sind, je eine Bohrung (73) aufweist, durch welche eine Verbindung zwischen dem im Küken (8) angeordneten Durchgang (75) und dem jeweiligen Raum (18, 19) hergestellt ist, wobei aufgrund der unterschiedlich groß ausgebildeten stirnseitigen Flächen des Kükens (8) eine Axialkraft wirksam wird, welche das Küken (8) in einen Sitz des Gehäuses (2) oder in eine als Sitz ausgebildete und im Gehäuse (2) im Bereich Strömungskanals angeordnete Buchse (15) einpreßt.

## Claims

1. A shut-off and regulating valve comprising a shut-off element, in particular in the form of a stopcock (8), a housing (2) in which the shut-off element is arranged so as to rotate by means of a stem (26), and a housing cover (20) through which the stem (26), sealed by means of a first sealing element (50), is directed outside, the first sealing element (5) being supported between the cover (20) and a disc-shaped shoulder (54) on the side of the cover (20) facing the housing (2) and a second sealing element (60) being arranged on the side of the cover (20) remote from the housing, characterised in that the disc-shaped shoulder is in the form of an annular disc (54) which is separated from the stem (26) and is axially secured between the housing (2) and the side of the cover (20) facing the housing (2).

2. A shut-off and regulating valve according to claim 1, characterised in that the annular disc (54), in particular in combination with the first sealing element (50), is firmly pressed into an annular groove (56) on the side of the cover (20) facing the housing (2).

3. A shut-off and regulating valve according to either claim 1 or 2, characterised in that the first sealing element (50) has a sealing lip (52) which bears against the stem (26), said sealing lip having a hook-shaped cross-section and being supported by a thrust ring (53) within the radially inner region of the annular disc (54), on the side facing the cover (20)

4. A shut-off and regulating valve according to any one of claims 1 to 3, characterised in that the second sealing element (60) which bears substantially without bias against the stem (26) may, if necessary, be set to a predetermined value of bias and thus in its sealing action relative to the stem (26), by adjusting an element (62) surrounding the stem (26), more particularly a bush (62).

5. A shut-off and regulating valve according to any one of claims 1 to 4, characterised in that the stem (26) has an annular shoulder (42) upon which acts an axially adjustable collar (40), more particularly via an annular body (44) having good sliding properties, the stem (26) and the stopcock (8) connected thereto being adjustable in the direction of the longitudinal axis (10) of the stem (26) by moving the collar (40).

6. A shut-off and regulating valve according to any one of-claims 1 to 4, characterised in that the housing (2) has, on the side opposite the stem (26), a bore (76) closed off by a cover (78), and a bolt (80) is axially adjustable in the cover (78) which acts upon the stopcock (8) via a pressure body (84), preferably also via a sealing diaphragm.

7. A shut-off and regulating valve according to any one of claims 1 to 6, characterised in that the stopcock (8) is arranged to be movable with play in the direction of the longitudinal axis (34) of the stem (26), a gap (32) for determining the extent of play being provided between the stem (26) and the stopcock (8) or between a connecting body (90), provided for connecting the stem (26) and the stopcock (8), and the stem (26) or the stopcock (8).

8. A shut-off and regulating valve according to any one of claims 1 to 7, characterised in that an annular chamber (70) which surrounds the stem (26) and serves to monitor leakage is axially arranged between the two sealing elements (50, 60).

9. A shut-off and regulating valve according to claim 8, characterised in that the annular chamber (70) is connected, via a passageway (72), to a leakage monitoring device (74).

10. A shut-off and regulating valve according to any one of claims 1 to 9, characterised in that the annular disc (54) extends to the immediate vicinity of the surface of the stem (26), the stem (26) has an annular collar

7

(36) which is axially arranged, with respect to the annular disc (54), on the opposite side to the first sealing element (50) and the annular collar (36) has an outside diameter which is greater than the inside diameter of the annular disc (54).

11. A shut-off and regulating valve according to any one of claims 1 to 10, characterised in that the stopcock (8) has, between its passage (75) and spaces (18, 19) arranged on a side of the stopcock (8) facing the stem (26) or remote from the stem (26) and closed off towards the outside within the housing (2) and delimited by end faces of the stopcock (8) in the direction of the axis (10) of the shaft (26), a respective bore (73) through which the passage (75) arranged within the stopcock (8) communicates with the respective space (18, 19), an axial force thus being produced as a result of the different size of the end faces of the stopcock (8) which presses the stopcock (8) into a seat of the housing (2) or into a bush (15) constructed as a seat and arranged in the housing (2) within the region of the flow channel.

**Revendications**

1. Robinet d'arrêt et de réglage comprenant un élément obturateur constitué en particulier par un tournant (8), un corps (2) dans lequel l'élément obturateur est monté de façon qu'on puisse le faire tourner au moyen d'un arbre (26), et un chapeau de corps (20) à travers lequel l'arbre (26) est monté à joint étanche au moyen d'un premier élément d'étanchéité (50) et émerge à l'extérieur, le premier élément d'étanchéité (50) étant appuyé contre la face du chapeau (20) qui est dirigée vers le corps (2), contre le corps (20) et un talon (54) en forme de rondelle et un deuxième élément d'étanchéité (60) et disposé contre le côté du chapeau (20) qui est le plus éloigné du corps, *caractérisé en ce que* le talon en forme de rondelle est constitué par un élément distinct de l'arbre (26), revêtant la forme d'une rondelle annulaire (54), qui est bloqué axialement entre le corps (2) et la face du chapeau (20) qui est dirigée vers le corps (2).

2. Robinet d'arrêt et de réglage selon la revendication 1, *caractérisé en ce que* la rondelle annulaire (54) est emboîtée é force en position fixe dans une gorge annulaire (56) formée dans la face du chapeau (20) qui est dirigée vers le corps (2), en particulier conjointement avec le premier élément d'étanchéité (50).

3. Robinet d'arrêt et de réglage selon la revendication 1 ou 2, *caractérisé en ce qu'*une lèvre d'étanchéité (52) du premier élément d'étanchéité (50) qui est en appui contre l'arbre (26) présente en section transversale une forme en équerre et est appuyée contre la face dirigée vers le chapeau (20) dans la région radialement intérieure de la rondelle annulaire (54), de préférence au moyen d'une bague d'appui (53).

4. Robinet d'arrêt et de réglage selon une des revendications 1 à 3, *caractérisé en ce que* le deuxième élément d'étanchéité (60) qui est en appui contre l'arbre (26) sensiblement sans précontrainte, peut être réglé selon la nécessité sur une valeur prédéterminée de précontrainte, et par conséquent d'effet d'étanchéité par rapport à l'arbre (26), par déplacement d'un élément (62) qui entoure l'arbre (26), en particulier d'une douille (62).

5. Robinet d'arrêt et de réglage selon une des revendications 1 à 4, *caractérisé en ce que* l'arbre (26) présente un épaulement annulaire (42) sur lequel une douille (40) pouvant être positionnée dans la direction axiale agit, en particulier par l'intermédiaire d'un corps annulaire (44) qui présente de bonnes propriétés de glissement, et que le tournant (8) relié à cet arbre peut être positionné selon la direction de l'axe longitudinal (10) de l'arbre (26).

6. Robinet d'arrêt et de réglage selon une des revendications 1 à 4, *caractérisé en ce que* le corps (2) présente, sur le côté qui est à l'opposé de l'arbre (26), un perçage (76) fermé par un couvercle (78), en ce que, dans le couvercle (78), est montée, de façon à pouvoir être positionné dans la direction axiale, une vis (80 qui agit sur le tournant (8) par l'intermédiaire d'un corps de pression (84), de préférence également par l'intermédiaire d'une membrane d'étanchéité (82).

7. Robinet d'arrêt et de réglage selon une des revendications 1 à 6, *caractérisé en ce que* le tournant (8) est agencée mobile avec jeu selon la direction de l'axe longitudinal (34) du corps (2) cependant qu'il est prévu, entre l'arbre (26) et le tournant (8) ou entre un corps de liaison (90) qui est prévu pour relier l'arbre (26) et le tournant (8) et l'arbre (26) ou le tournant (8), une fente (32) qui détermine le jeu du mouvement.

8. Robinet d'arrêt et de réglage selon une des revendications 1 à 7, *caractérisé en ce qu'*il est prévu une chambre annulaire (70) interposée axialement entre les deux éléments d'étanchéité (50, 60) et qui entoure l'arbre (26) et sert à la surveillance des fuites.

9. Robinet d'arrêt et de réglage selon la revendication 8, *caractérisé en ce que* la chambre annulaire (70) est reliée par une conduite (72) à un appareil (74) prévu pour la surveillance des fuites.

10. Robinet d'arrêt et de réglage selon une des revendications 1 à 9, *caractérisé en ce que* la rondelle annulaire (54) se prolonge jusqu'à la proximité immédiate de la surface de l'arbre (26), en ce que l'arbre (26) présente une embase annulaire (36) qui est disposée, dans la direction axiale, du côté de la rondelle annulaire (54) qui est à l'opposé de la première bague d'étanchéité (50), *et en ce que* l'embase annulaire (36) présente un diamètre extérieur qui est plus grand que le diamètre intérieur de la rondelle annulaire (54).

11. Robinet d'arrêt et de réglage selon une des revendication 1 à 10, *caractérisé en ce que* le tournant (8) présente un perçage (73) entre son passage (75) et chacun des espaces (18, 19) qui sont disposés respectivement sur le côté du tournant (8) qui est dirigé vers l'arbre (26) et sur le côté qui est dirigé à l'opposé de l'arbre (26), et qui sont fermés à l'intérieur du corps (2), isolés de l'extérieur et limités, dans la direction parallèle à l'axe (10) de l'arbre (26), par des surfaces frontales du tournant (8), perçages à travers lesquels sont établies des liaisons entre le passage (75) prévu dans le tournant (8) et les espaces correspondants (18, 19) cependant que, en raison du fait que les surfaces frontales du tournant (8) sont de différentes grandeurs, il s'exerce une force axiale qui presse le tournant (8) dans un siège du corps (2) ou dans une douille (15) formant un siège et disposée dans le corps (2), dans la région du canal de passage de l'écoulement.

Fig. 1

Fig. 2